# EUROPEAN PATENT APPLICATION

(11) **EP 1 510 951 A1**
(43) Date of publication of application: **02.03.2005**
(21) Application number: 03019349.4
(22) Date of filing: 27.08.2003
(51) Int. Cl.: G06F 17/60

(54) **A data processing method, system and computer program**

(71) Applicant: SAP Aktiengesellschaft, 69190 Walldorf (DE)
(72) Inventor: v. Helmolt, Hans-Ulrich, 69126 Heidelberg (DE); Picht, Michael, 69190 Walldorf (DE); Jaeck, Volker, 69226 Nussloch (DE); Seeburger, Jürgen, 69168 Wiesloch (DE)
(74) Representative: Richardt, Markus Albert, Dipl.-Ing.

(57) **Abstract**

A system, method and computer program product are disclosed for data processing in a supply chain management utilizing a central data processing system which integrates a plurality of functionalities for partner and system determination, as well as availability checking. Upon receiving a request which includes a plurality of items from a customer, unique identifiers are generated and assigned relevant to the customer's items in response to the request. Each request is split into plurality of sub-requests where each sub-request is assigned to an internal or external system by means of the rules. In case a synchronous communication is used the dynamic combining of the sub-results is performed at runtime. In case an asynchronous communication is employed, the sub-responses are aggregated in a database until all sub-responses have been received. The amount of requested resources is adjusted in both cases based on the information received from the central data processing system.

## Description

### Field of the invention

The present invention relates in general to a data processing system and, in particular, to a supply chain management system and method.

### Background and prior art

The modern logistic network of the business relationships has evolved into increasingly complex multi-partner and multi-system environment shaped by dynamic events. Supply chain management is getting more unpredictable for example due to outsourcing or globalization. The determination of a partner in the modern supply chain is usually done by functionalities located in vast array of systems: for example, planning systems, purchasing systems, and transportation systems. Many of these systems are often legacy systems. Thus, the coordination of processes inside the logistic network needs to be responsive, adaptive and open to integrate partners.

U.S. Pat. No. 6,591,243 (Grettve et al.) discloses a method and system for improved supply chain management where detailed description of the prior art logistic systems and the related prior art problems are included.

One of the considerable problems plaguing Supply Chain Management is the lack of timely communication between the different partners and systems in the supply chain what in turn results in higher costs, inadequate resources or even waste. Also, the lack of possibility to quickly and effectively determine at run time which partners or systems are available adds to the problem. Therefore, there is a need for central data processing system that would be flexible and able to react to different business scenarios..

### Summary of the invention

According to various embodiments of the central data processing system disclosed herein, a method which integrates a plurality of functionalities for partner and system determination, as well as availability checking is described. The central data processing system includes hardware, software and communications components that cooperatively achieve the technical effect of an improved, centralized data processing in a supply chain management. A customer request containing plurality of items is received from a corresponding customer of a supply chain. Item unique identifiers are generated and assigned to the items. Then, a plurality of sub-requests is generated where each sub-request is assigned to a system by means of the rules.

The sub-requests carrying separate unique identifiers are processed at the partner side and sub-responses are received at the central data processing system. Responses are generated based on association of sub-responses with the same original item and then, send back to the customer's data processing system. In case the synchronous communication is used the dynamic combining of the sub-results is performed at runtime. In case asynchronous communication is employed, the sub-responses are aggregated in a database until all sub-responses have been received. The amount of requested resources is adjusted in both cases based on the information received from the central data processing system.

The present invention makes possible to easily plug in the existing functionalities into the one central data processing system which could provide flexible and adaptable partner and system determination, as well as, availability checks in a supply chain management. It also enables faster and more effective execution and control of logistic processes in a complex partner/system environment. It also provides an interface that allows a customer to deal with one system and avoid the complexity of multiple systems and functions.

In particular the present invention can be used for a fulfilment coordination engine as described in unpublished PCT Patent Application number PCT/EP03/02279 (attorney Docket No. SAP.203.01 PCT) which is herein incorporated by reference in its entirety.

### Brief description of the drawings

- Figure 1: illustrates a central data processing system for processing of the customer request of the present invention.
- Figure 2: is a flowchart of a process describing a method of the present invention.
- Figure 3A: illustrates structure of the document used in a central data processing system and mapping of the data from standard orders.
- Figure 3B: illustrates the case when base documents used in a central data processing system create document hierarchies.
- Figure 4: is a block diagram of a more detailed embodiment of the central data processing system of the present invention where synchronous communication is used.
- Figure 5: is a block diagram of a more detailed embodiment of the central data processing system of the present invention where asynchronous communication is used.

### Detailed description

The claimed invention is applicable to many different industries. One skilled in the art will appreciate that the various embodiments and concepts of the present invention are applicable to plurality of industries without straying from the spirit of the present invention.

The present invention includes a supply chain management system involving at least one customer. Supply chain also includes at least one partner. The supply chain partners include business partners, locations and logical systems.

Exchange Infrastructure (XI) can be used for various embodiments of the present invention. It enables the development of the cross-system applications that exchange a multitude of system messages using the runtime infrastructure and synchronous or asynchronous communication. However, since the use of synchronous communication via the XI currently requires that the called function works without state, the partner ascertainment service can only be called synchronously via the XI if the application scenario does not require that the partner ascertainment service or any of the partner ascertainment functions it calls work with state.

The aim of the Exchange Infrastructure is to integrate different systems implemented on different platforms (Java, ABAP, and so on). The Exchange Infrastructure is based on an open architecture, makes uses of open standards, in particular those from the XML (eXtensible Markup Language) and Java environments; and offers services that are essential in a heterogeneous and complex system landscape: namely a runtime infrastructure for message exchange; configuration options for managing business processes and message flow; and options for transforming message contents between the sender and receiver systems.

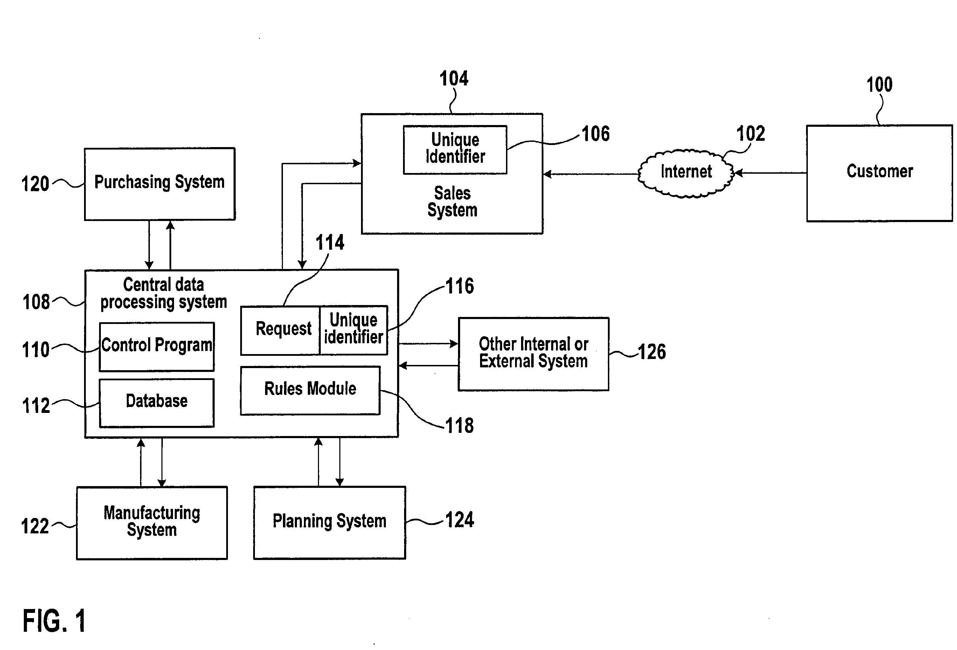

Figure 1 illustrates a central data processing system 108 for processing of a customer request 114 according to an embodiment of the present invention. Sales system 104 provides electronic connectivity to the central data processing system and enables collection of customer requests for future processing. Utilizing a network, for example an Internet 102, a request for at least one item is received from a corresponding customer 100 at the central data processing system.

Subsequently, a central data processing system checks if each item has a unique identifier 106; if an item is found without a unique identifier, a new unique identifier 116 is generated and assigned to this item. Customer requests comprising a plurality of items are then processed by means of a set of rules 118 in a looping mode, that is when the request has more then one item then each item is sequentially processed and the response is send for each item.

The control program 110 implements the corresponding control processes. The assigned unique identifiers are then stored in a database 112. When partner systems such as for example a purchasing system 120, a manufacturing system 122, a planning system 124 or any other internal or external systems126 send their responses back, those responses are associated in turn with the original items and the final response is then sent to the customer's data processing system.

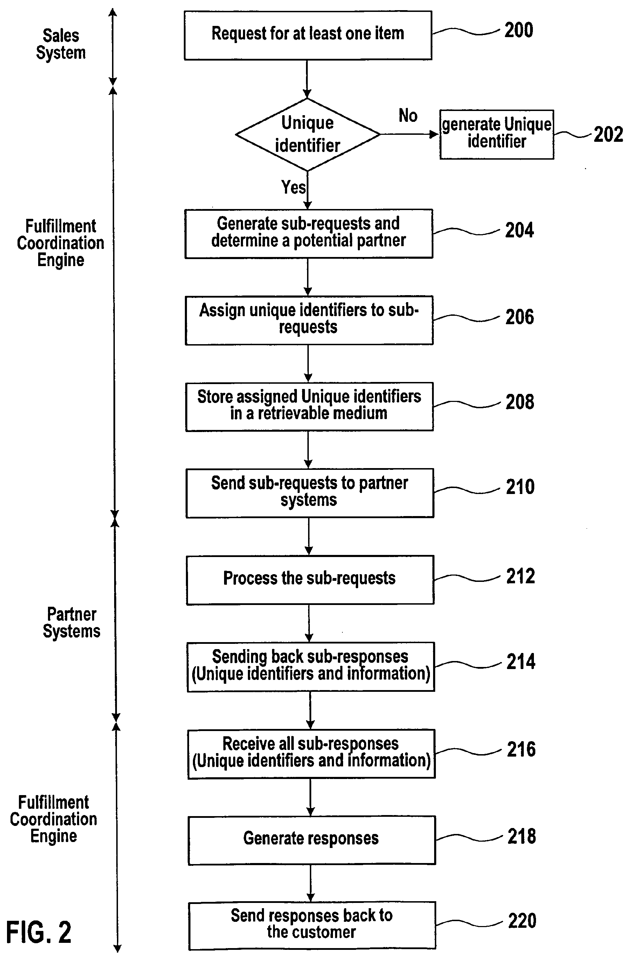

Figure 2 depicts a corresponding flow chart. In the step 200 a request for at least one item is sent by the customer's data processing system, in this case a Sales system. When request is received in a central data processing system, in this case a Fulfilment Coordination Engine (FCE), in the step 202 each item is checked for presence of the unique identifier; if the unique identifier is missing the FCE generates and assigns unique identifiers to the item. Then, in the step 204, the sub-requests are generated and assigned to a partner's system by means of the rules.

In the next step 206 each of the sub-requests receives a separate unique identifier and assigned unique identifiers are stored in the retrievable medium in the step 208. That means that in case of asynchronous communication, the unique identifiers are stored in the database. However, in the case of synchronous communication the unique identifiers are stored in the memory and they are only in this case stored in the database when the Logical Unit of Work (LUW) in the called system is ended with the command COMMIT. In the step 210 sub-requests are sent to partner systems.

At the partner system side steps 212 and 214 are performed. First, all the requests are processed and then sub-responses including unique identifiers and information are send back to the central data processing system. Fulfilment Coordination Engine, in the step 216, receives all sub-responses from the partner systems and in the step 218, the responses are generated based on association of sub-responses with the original item. In the final step 220, the responses are send back to the customer's data processing system, in this case a sales system.

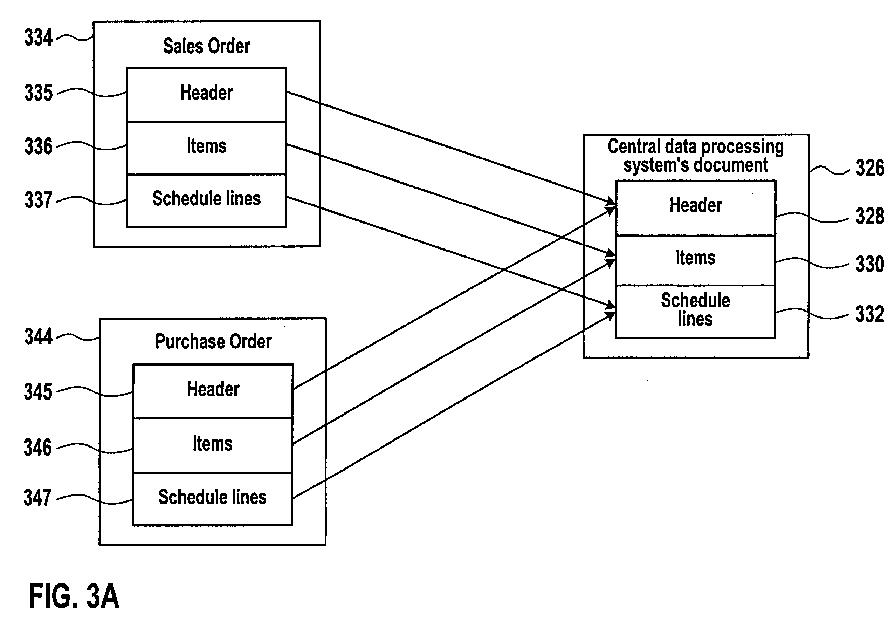

Figure 3A illustrates a structure of the document used in the central data processing system and associated mapping of the data from standard orders. Data processing conducted in multi-system and multi-business environment means that various document types can be used such as for example purchase orders or sales orders.

In order to be able to operate on the plurality of documents, central data processing system can for example use an order-like document structure 326 that consists of a header section 328, at least one item 330 that can contain for example fields like business partner, product, location or contract; and at least one schedule line 332 per item comprising information regarding a delivery date and a quantity. This special design of the three level structure allows all documents that exist in internal systems as well as all those documents of different applications that are relevant for central data processing to be mapped. If for example, sales order processing calls the central data processing system, then the data of the sales order 334 that was transferred to the central data processing system via the interface, is mapped onto the document 326.

The sales order header 335 is mapped on the document header 328, the order items 336 are mapped on the document items 330 and the request schedule lines 337 on the document schedule lines 332. The similar process takes place when the system receives a purchase order 344. The purchase order header 345 is mapped on the document header 328, the purchase order items 346 are mapped on the document items 330 and the purchase order schedule lines 347 on the document schedule lines 332.

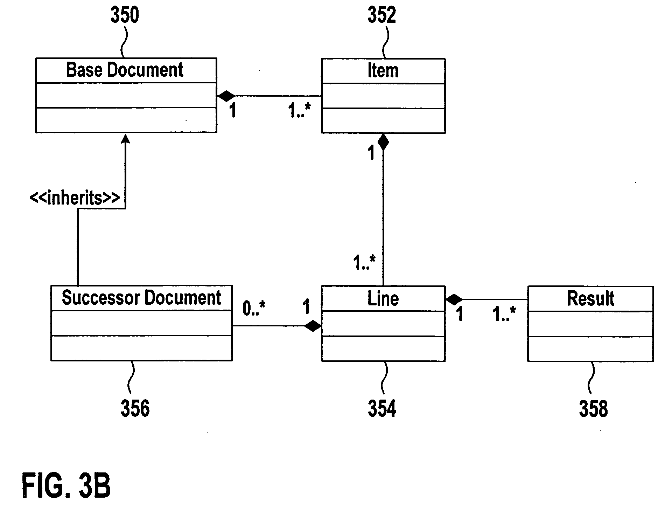

Figure 3B depicts, for example, the case when product substitution and/or location substitution occurs and base documents 350 create document hierarchies. For example in the result 358, schedule lines 354 have a list of successor items 352 which can include partners, substitution products or locations. Also, a schedule line 354 contains several successor documents 356. Beside product and/or location substitution also further hierarchy levels can be produced in the document.

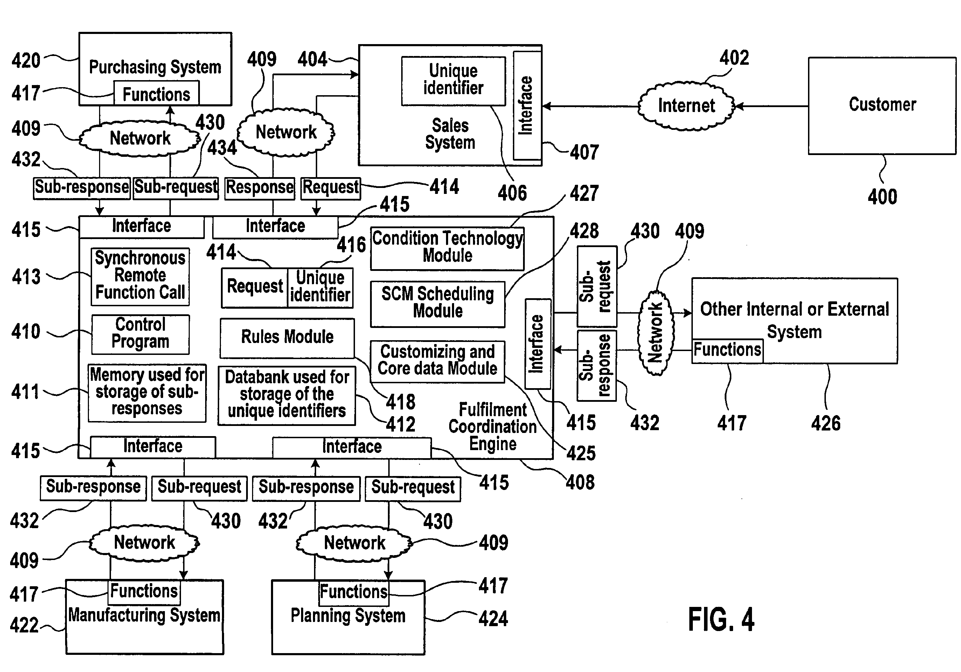

Figure 4 illustrates a more detailed embodiment of the data processing system of the present invention, describing a case when synchronous communication is used throughout the supply chain. The embodiment of Figure 4 constitutes a logical continuation of the Figure 1 where like elements are referenced by like reference numbers having added 300. Synchronous communication takes place in this embodiment of the invention via Synchronous Remote Function Call (sRFC) 413 if any of the called partner functions work with state. Since the use of synchronous communication via the XI currently requires that the called function works without state, the partner ascertainment service can only be called synchronously via the XI if the application scenario does not require that the partner ascertainment service or any of the partner's functions it calls work with state.

According with the preferred embodiment the central data processing system is in this case a Fulfilment Coordination Engine (FCE) 408. As shown in Figure 4, FCE receives a request 414 for at least one item from a corresponding customer 400 via the Network 409 which can also include Internet 402. In this case a calling application is a Sales system 404. Subsequently, each item is checked for the presence of a unique identifier 406, if an item is found without a unique identifier, a new unique identifier 416 is generated and assigned to this item. The control program 410 is the central component of the Fulfilment Coordination Engine.

The control program must be called to begin the request processing. The set of rules 418 determined by the control program contains a sort profile, a selection profile, a search key and the determination procedure. A sort profile is used to determine how partner lists should be sorted for further processing. A selection profile is used to define the procedure used to select partners. A search key and the determination procedure are used to determine whether an availability check is executed and if so, what kind. A plurality of sub-requests 430 for plurality of partners' systems is then generated where each sub-request is assigned to an internal or external system by means of the set of rules where complex dependencies have access using Condition Technology 427. In this case, the objects, for example rules searched for are determined by evaluating conditions. The search key is then interpreted as a condition type.

The Fulfilment Coordination Engine then calls synchronously functions 417 according to Customizing 425. When synchronous communication is used, the customer receives immediately a response also synchronously, so that customer's data processing system can continue working. In most cases, called functions are implemented in the external systems. Functions are not called directly but via corresponding interfaces 415. In contrast to functions, the interfaces are always implemented on the side of the central data processing system. The call of a function, and the respective mapping are implemented within an interface. There is a 1:1 relationship between interfaces and functions: There must be a separate interface for each of the functions. In contrast, an N: M relationship exists between interfaces and logical systems.

The assigned unique identifiers are then stored in a database 412 while sub-requests are sent to different partner systems. Sending of the sub-requests to partner systems such as for example a purchasing system 420, a manufacturing system 422, a planning system 424 or any other internal or external systems 426 further comprises either sending a request for a partner search or a partner availability check at schedule-line level or determining at least one business system or an availability check for this system at schedule-line level. It is further determined on the item level which availability check function should be called. A separate unique identifier for each of the sub-requests is then generated.

Availability check returns confirmation of dates and quantities as well as, if necessary, alternative products and/or locations are included. The availability check reserves temporary a requested resources that have been identified as available. The resources are reserved this way that the requested resources are equal to the original resources less the quantities that have already been confirmed and reserved via partner's system functions previously called. Thus, availability checks carried out in processes running in parallel do not consume the same quantities. It is assured that overbooking of resources does not occur during an availability check.

Some functions enable the assignment of an expiration date to their temporary quantity assignments. If this date has been reached, the temporary quantity assignments are automatically handled (deleted, for example). Up to this date, the temporary quantity assignments are active, that is, they reserve a quantity. However, if the expiration date is not assigned automatically, the Fulfilment Coordination Engine has to sent a specific message terminating the reservation of resources.

On the other hand, when partner search is executed, a list of partners is returned. Subject to the partner's functions used, further data such as prices and contracts, and similar, can be also included.

Supply Chain Management (SCM) scheduling module 428 can be called by the Fulfilment Coordination Engine to determine the dates which are transferred to the partners' functions based on the dates received from the customer. Also, it is further used to determine the dates to be returned to the customer based on the dates received in the sub-responses from the partners' systems.

When Fulfilment Coordination Engine receives the sub-responses 432, those resulting sub-responses which are sent by the partner systems back to the FCE have the same unique identifiers as the sub-requests sent originally. Thus, the sub-responses can be associated on the base of the matched unique identifiers with the original sub-requests. Those sub-responses are then stored in the main memory 411 of the Fulfilment Coordination Engine and the internal logic checks if all the roots of the unique identifiers are there so the final response 434 can be sent to the customer's data processing system immediately in order for it to continue working without interruptions. The response can be displayed utilizing a sales system interface 407. However, it is also possible that the result is not displayed at all, it depends on the calling system/application which of the two options occurs. In any case, all the details of the partner search or/and availability check are hidden from the calling system/application.

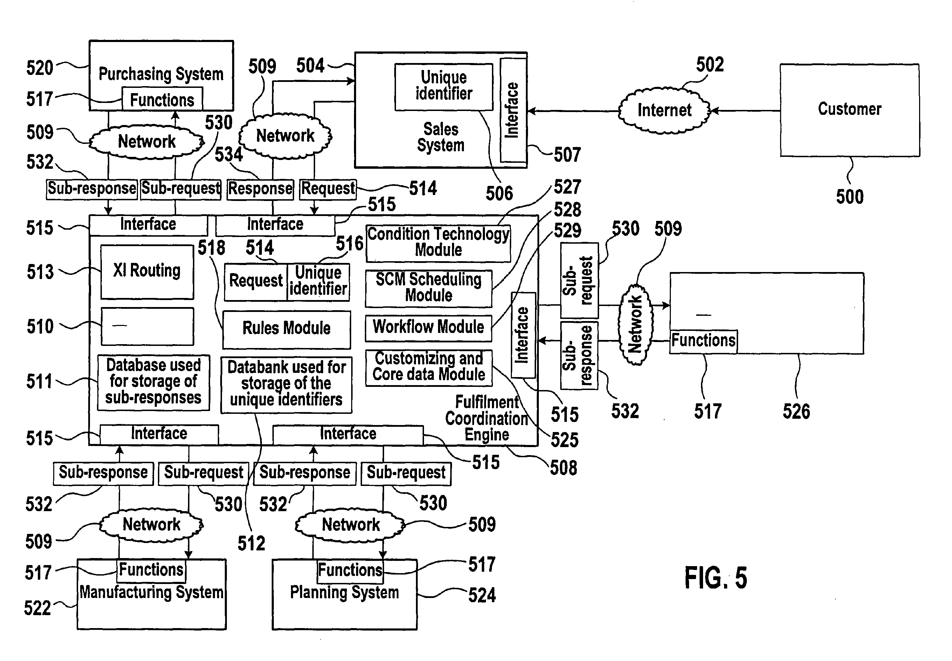

Figure 5 illustrates a more detailed embodiment of the data processing system of the present invention, describing a case when an asynchronous communication is used throughout the supply chain. The embodiment of Figure 5 constitutes a logical continuation of the Figure 1 where like elements are referenced by like reference numbers having added 400.

According with the preferred embodiment the central data processing system is in this case a Fulfilment Coordination Engine (FCE) 508. In the case of the use of asynchronous communication the Fulfilment Coordination Engine is called asynchronously and it also calls asynchronously the functions located in the external partner systems (520, 522, 524, and 526) via the control program. Asynchronous communication takes place via the Exchange Infrastructure (XI) 513.

Thus, the Fulfilment Coordination Engine 508 receives asynchronously a request 514 for at least one item from a corresponding customer 500 via the Network 509. In this case an asynchronous call is made by sales system 504. Subsequently, each item is checked for the presence of a unique identifier 506, if an item is found without a unique identifier, a new unique identifier 516 is generated and assigned to this item. A plurality of sub-requests 530 for plurality of partners' systems is then generated where each sub-request is assigned to an internal or external system by means of the set of rules 518 which allow to configure the sequence functions are called. Complex dependencies have access using Condition Technology 527. Then the Fulfilment Coordination Engine calls asynchronously partner's functions according to Customizing 525 via the control program 510 and the sub-requests are processed at the partner side. The resulting sub-responses which are sent by the partner systems back to the Fulfilment Coordination Engine have the same unique identifiers as the sub-requests sent originally.

Thus, when FCE receives asynchronously the sub-responses 532, those sub-responses are stored in the database tables 511 and can be associated on the base of the matched unique identifiers with the original sub-requests, so that the central data processing can be continued when all the sub-responses of the asynchronous function calls are available. In order to determine if all sub-responses are collected, a control program 510 performs a query each time a sub-response comes back from the partner system, in order to retrieve all relevant sub-responses stored so far in the database.

If the number of the stored responses is determined to be insufficient, the received sub-response is then stored in the database until all the sub-responses are collected. When on the other hand, the database query determines all the received sub-responses to be sufficient, then the final response 534 is sent to the customer's data processing system. The response can be displayed utilizing a sales system interface 507. However, it is also possible that the result is not displayed at all, it depends on the calling system/application which of the two options occurs. In any case, all the details of the partner search or/and availability check are hidden from the calling system/application.

SCM scheduling module 528 can be called by the Fulfilment Coordination Engine system to determine the dates which are transferred to the partners' functions based on the dates received from the customer. Also, it is further used to determine the dates to be returned to the customer based on the dates received in the sub-responses from the partners' systems.

In case of asynchronous communication, also the workflow 529 can be used together with the Fulfilment Coordination Engine. In this case sub-responses from partner's functions are received via the workflow which is started when asynchronous calls of the partner's functions are triggered.

Although the present invention has been described in detail with reference to certain preferred versions thereof, other versions are possible. The detailed descriptions of the synchronous and asynchronous communication in figures 4 and 5 were presented as unmixed systems for the sake of the clarity. Nevertheless, the present invention is also designed for the many versions of mixed asynchronous and synchronous communication. For example, the calling system/application can send a synchronous call, then the Fulfilment Coordination Engine can call some of the partner systems using synchronous communication and other systems can be called asynchronously. Also, other variations of mixed systems are possible. Therefore the spirit and scope of the appended claims should not be limited to the preferred versions herein.

### List of Reference Numerals

- 100: customer
- 102: internet
- 104: sales system
- 106: unique identifier
- 108: central data processing system
- 110: control program
- 112: database
- 114: request
- 116: unique identifier
- 118: rules module
- 120: purchasing system
- 122: manufacturing system
- 124: planning system
- 126: other internal or external system
- 326: document of the central data processing system
- 328: document header
- 330: document items
- 332: document schedule lines
- 334: sales order
- 335: sales order header
- 336: sales order items
- 337: sales order schedule lines
- 344: purchase order
- 345: purchase order header
- 346: purchase order items
- 347: purchase order schedule lines
- 350: base document
- 352: item
- 354: schedule line
- 356: successor document
- 358: result
- 400: customer
- 402: internet
- 404: sales system
- 406: unique Identifier
- 407: interface
- 408: Fulfilment Coordination Engine
- 409: network
- 410: control program
- 411: memory used for storage of sub-responses
- 412: database used for storage of the unique identifiers
- 413: Synchronous Remote Function Call
- 414: request
- 415: interface
- 416: unique identifier
- 417: functions
- 418: rules module
- 420: purchasing system
- 422: manufacturing system
- 424: planning system
- 425: customizing and core data module
- 426: other internal or external system
- 427: Condition Technology module
- 428: scheduling module
- 429: workflow module
- 430: sub-request
- 432: sub-response
- 434: response
- 500: customer
- 502: internet
- 504: sales system
- 506: unique Identifier
- 507: interface
- 508: Fulfilment Coordination Engine
- 509: network
- 510: control program
- 511: database used for storage of sub-responses
- 512: database used for storage of the unique identifiers
- 513: XI Routing
- 514: request
- 515: interface
- 516: unique identifier
- 517: functions
- 518: rules module
- 520: purchasing system
- 522: manufacturing system
- 524: planning system
- 525: customizing and core data module
- 526: other internal or external system
- 527: Condition Technology module
- 528: scheduling module
- 529: workflow module
- 530: sub-request
- 532: sub-response
- 534: response

## Claims

1. A data processing method for a customer request comprising the steps of:
a) receiving a request for at least one item at a central data processing system;
b) generating a plurality of sub-requests for a plurality of partner systems where each sub-request is assigned to an internal or external system by means of rules;
c) generating a separate unique identifier for each of the sub-requests;
d) storing the unique identifiers being assigned to the sub-requests, in a retrievable medium;
e) sending the sub-requests with the unique identifiers to partner systems;
f) receiving back sub-responses at the central data processing system, said sub-responses having unique identifiers in association with the unique identifiers of the request;
g) generating a response based on association of the sub-responses with the original item;
h) sending the response back to the customer data processing system.

2. The method of claim 1, wherein said sending of the sub-requests to partner systems further comprises at least one of the following steps:
- sending a sub-request for a partner search or a partner availability check at item level or:
- determining at least one business system or an availability check for this system at item level.

3. The method of claim 2, wherein performing of the partner search is done with the use of functions.

4. The method of claim 3, wherein the functions comprise standard functions, as well as functions of customers and partners.

5. The method of claim 2, whereby the partner system which received the request for availability check temporarily reserves a requested resource that has been identified as available.

6. The method of claim 5, whereby the partner system deletes the reservation for the requested resources unless the central data processing system sends a message if no acceptance is received from the customer within the predetermined time interval.

7. The method of any one of the preceding claims, wherein the request comprises a plurality of items and steps b) to g) are carried out for each item.

8. The method of any one of the preceding claims, whereby the request comprising a plurality of items is processed in a looping mode.

9. The method of any one of the preceding claims, wherein the request for the at least one item has a structure of an order-like document that comprises:
- a header section;
- at least one item;
- at least one schedule line per item comprising information regarding requested by the customer a delivery date and a quantity.

10. The method of any one of the preceding claims, wherein the step b) includes criteria defined by the customer.

11. The method of any one of the preceding claims, further comprising the following steps conducted prior to step h):
- comparing at least one sub-response to the preferred choice specified by a customer;
- selecting a preferred choice from the group consisting of the at least one sub-response.

12. The method of claim 11, wherein the act of selecting the preferred choice is based on customer's preferences.

13. The method of claim 11 or 12, wherein asynchronous communication means are used and the sub-responses are aggregated in the database until all sub-responses have been received.

14. A central data processing system for processing of the customer request comprising:
a) means for receiving the request (114; 414; 514) for at least one item at a central data processing system (108);
b) means for generating a plurality of sub-requests (430;530) for plurality of partners where each sub-request is assigned to an internal or external system by means of the rules (118; 418; 518);
c) means for generating a separate unique identifier (116;416;516) for each of the sub-requests;
d) means for storing the unique identifiers being assigned to the sub-requests, in a retrievable medium (112; 412; 512);
e) means for sending the sub-requests with the unique identifiers to partner systems;
f) means for receiving back sub-responses (432; 532) at the central data processing system, said sub-responses having unique identifiers in association with the unique identifiers of the request;
g) means for generating a response (434; 534) based on association of the sub-responses with the original item;
h) means for sending the response back to the customer data processing system.

15. The central data processing system of claim 14, whereby a central data processing system further comprises interfaces for communication between a sales system, the purchasing system, the manufacturing system, the planning system and other internal or external systems.

16. The system of claim 14 or 15, further comprising asynchronous communication means being adapted to the use of database tables for storage of the sub-responses.

17. The system of claim 16, wherein the means of generating a response based on association of the sub-responses with the original item and sending the response back to the customer data processing system, in case of the asynchronous communication, are applied only when all the requested sub-responses are collected in the database.

18. The system of claim 17, wherein the asynchronous communication means are adapted to execute a query to determine if all necessary sub-responses have been collected.

19. A computer-readable storage medium holding code for performing the steps of:
a) receiving a request for at least one item at a central data processing system;
b) generating a plurality of sub-requests for plurality of partners where each sub-request is assigned to an internal or external system by means of rules;
c) generating a separate unique identifier for each of the sub-requests;
d) storing the unique identifiers being assigned to the sub-requests, in a retrievable medium;
e) sending the sub-requests with the unique identifiers to partner systems;
f) receiving back sub-responses at the central data processing system, said sub-responses having unique identifiers in association with the unique identifiers of the request;
g) generating a response based on association of the sub-responses with the original item;
h) sending the response back to the customer data processing system.
